# EUROPEAN PATENT SPECIFICATION

(11) **EP 2 614 980 B1**
(45) Date of publication and mention of the grant of the patent: **18.03.2015**
(21) Application number: 12150764.4
(22) Date of filing: 11.01.2012
(51) Int. Cl.: B60L 11/18, H01F 38/14, H01R 13/52

(54) **Contactless connector system for coupling an electric vehicle to a power supply**
Kontaktfreies Verbindersystem für den Anschluss eines elektrischen Fahrzeugs an eine Stromversorgung
Système de connecteur sans contact pour le couplage d'un véhicule électrique sur une alimentation électrique

(43) Date of publication of application: 17.07.2013
(73) Proprietor: Tyco Electronics Nederland B.V., 5222 AR's-Hertogenbosch (NL)
(72) Inventor: Broeksteeg, Johannes, 5346 WJ Oss (NL); Jaeger, Peter Dirk, 4271 BP Dussen (NL)
(74) Representative: Grünecker, Kinkeldey, Stockmair & Schwanhäusser

(56) References cited:
- EP-A2- 0 878 811
- WO-A1-2011/057755
- DE-A1-102009 017 553

## Description

The present invention relates to a contactless connector for coupling an electric vehicle to a power supply, to a belonging receptacle and to a contactless connector system. Electric vehicles (EV) generally use one or more electric motors for propulsion. Three main types of electric vehicles exist: those that are directly powered from an external power station, those that are powered by stored electricity originally from an external power source, and those that are powered by an onboard electrical generator, such as an engine or a hydrogen fuel cell. Electric vehicles include electric cars, trains, lorries, airplanes, boats, motor-cycles and scooters.

During the last few decades, environmental impact of the petroleum-based transportation infrastructure has led to renewed interest in an electric transportation infrastructure. In particular, electric vehicles which are powered by stored electricity are gaining increased importance for individual transportation.

Those electric cars need to be charged from an external power source to which a connection is established by means of some kind of electric coupling. The preference for voltage and current in Europe is 220V, as this is typically available in the home environment, for instance, in a garage, and 16 A to 32 A. For such a charging at home or also at public places, where charging of a car can be offered, a simple, efficient and safe connector system is required. Furthermore, the car manufacturer needs design freedom regarding the location of the charger connector in order to allow simple, efficient, and safe charging.

For charging electric vehicles having onboard batteries, several concepts are known at present. The first concept is based on an inductive coupling between primary sided coils arranged in the ground, and a secondary coil arranged near the undercarriage of the car. Although this concept has high flexibility for the user and it is robust and effectively sealed against intrusion of dirt and moisture, a significant disadvantage can be seen in the power losses that occur due to a possible misalignment of the secondary and the primary coils with regard to each other.

DE 10 2009 01 7553 A1 relates to a contactless connector system wherein the primary side coil is wound around an essentially bone shaped ferrite core, whereas the secondary sided winding is formed by one single ring winding that is wound around a tubular ferrite core.

WO 2011/057755 A1 discloses an arrangement for connecting a vehicle to a stationary means, wherein a locking unit is arranged on the vehicle. The locking unit can be joined in a positively locking manner to a lock part which is joined to the stationary means, in particular via a flexible line. The lock part comprises means for energy transmission, in particular, for transmitting electrical energy. Concentric secondary and primary windings for a receptacle and a plug shaped connector are shown in figure 4 of this document.

From EP 0 878 811 A2 an asymmetric arrangement of the primary sided and secondary sided coils is known, where it is essential that the primary sided plug is inserted with the correct orientation. Furthermore, in the arrangement of this document the primary sided plug does not have a fixedly assembled ferrite core. The ferrite core is provided by a movable core part which is present at the power receiving portion and is coupled with the primary sided coil during the charging process.

Another concept is relying on mechanically contacting the car with a mating contact connected to the power source. Such a feeder connector is for instance shown in US 5,350,312. These mechanically contacting connectors, however, have the disadvantage that they are sensitive to the intrusion of dirt and moisture and that they further require an exact mechanical mating during the connection by an operator.

In order to overcome the disadvantage connected with these two concepts, it is further known to use inductive charging by means of a waterproof inductive charging paddle, as this is shown in US patent 6,356,052, US 6,297,614 B2 or US 6,373,221 B2. However, these paddle structured connectors have the disadvantage that they always need a strict keeping to a pre-defined orientation of the plug with respect to the socket.

Consequently, there exists a need for designing an improved connector system for coupling an electric vehicle to a power supply, which is easy to use, has low losses and can be fabricated in a particularly cost-effective way.

This object is solved by the subject matter of the independent claims. Advantageous embodiments of the present invention are the subject matter of the dependent claims.

The present invention is based on the idea that for enhancing its user friendliness, the design of a connector system must allow a mating without accurate visual control by the operator. In particular, the mating should advantageously be possible without the need of a defined alignment between the connector and the belonging receptacle in a direction across to the line of plug-in.

According to the present invention, a contactless connector for coupling an electric vehicle to a power supply therefore comprises at least one primary side coil, which is connected to a feeding power source, for being inductively coupled to at least one secondary side coil. The secondary side coil is arranged at a receptacle that is formed to engage with the connector. According to the present invention, the primary side coil is constructed rotation-symmetrically with respect to a rotation axis of the connector, which coincides with the plug-in direction of the connector into the receptacle.

Consequently, the connector may be inserted into the receptacle with a degree of freedom by 360° degrees rotation around the plug-in axis.

The insertion depth of the plug connector into the receptacle can easily be controlled by the construction and the clearance between the primary and the secondary coils can be minimized in order to enhance the efficiency of the inductive coupling. According to the present invention, a radial interconnection by 360° is established so that the plug can freely move around its longitudinal axis.

Thus, the invention offers a simple, safe and efficient way of charging an electric vehicle or other device, where the connectors (mated or unmated) are exposed to dirt, water, oil etc. According to the present invention, blind mating of the connector and receptacle is possible and an operator making the connection does not necessarily have to have a vision of what they are doing. This also allows some level of automatic coupling. Moreover, the present invention allows car manufacturers to design cars where the charging connector is exposed to dirt and water. There is no longer any need to cover open connectors and protect them against dirt and water. On the other hand, the invention avoids the need of designing complex and expensive water-tight solutions, as this is the case with sealings and temporary covers to protect electric contacts.

Although in the following description, the secondary side of the electric charging circuitry which is connected with battery is always assumed to be located at the receptacle, and the primary side being connected to the power supply is located at the plug (and cable), it is clear for a person skilled in the art that connector and receptacle may of course also be interchanged. In other words, in a first embodiment, the receptacle is arranged at the EV, whereas the connector plug is located at the primary power source, and in an alternative embodiment, this may be interchanged by arranging the plug, preferably equipped with a sufficiently long cable, at the car, and providing the charging power supply with a receptacle.

For improving the inductive coupling, the primary side and/or the secondary side coils may be equipped with ferromagnetic cores for guiding the magnetic field induced by the primary side coil. For the secondary side coil, the ferromagnetic core has an axially rotation-symmetric form and may additionally be provided with an opening for inserting at least one lead expanding to the tip of the connector. This lead may either be used for inductive, capacitive, or optical interconnection between the plug connector and belonging communication means arranged at the receptacle.

Thus, additional control functions can be added to the inductive power transfer: for instance, means of identification for checking whether a person is allowed to charge their vehicle at a particular power source, direct payment, and safety features, as for instance avoiding an overcharging, or the detection whether the plug connector is inserted and accordingly switching off the power if the connector is not attached to a receptacle. Such additional features add to the comfort, user-friendliness and safety of the charging procedure for electric vehicles.

In order to prevent the intrusion of any moisture or dust, the contactless connector as well as the receptacle each may have hermetically sealed housings, preferably fabricated from a molded plastic material.

In order to avoid that the mated connector gets disengaged from the receptacle unintentionally, releasable latching means may be provided for mechanically securing the contactless connector within the recess of the receptacle. To this end, any suitable means of retention may be chosen, e. g. latches, screws, or snap-in connection means.

The accompanying drawings are incorporated into and form a part of the specification to illustrate several embodiments of the present invention. These drawings together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. Further features and advantages will become apparent from the following more particular description of the various embodiments of the invention, as illustrated in the accompanying drawings, in which like references refer to like elements, and wherein:
- **FIG. 1**: shows a sectional view of a contactless connector system according to the present invention during the mating process;
- **FIG. 2**: shows a sectional view of the contactless connector system of FIG. 1 in the mated position;
- **FIG. 3**: shows a perspective view of the system of FIG. 1;
- **FIG. 4**: shows a perspective sectional view of the system of FIG. 1;
- **FIG. 5**: shows a sectional view of the mated connector system as shown in FIG. 2;
- **FIG. 6**: shows another perspective view of the contactless connector system;
- **FIG. 7**: shows another perspective view of the mated connector system;
- **FIG. 8**: shows a second embodiment of a contactless connector according to the present invention.

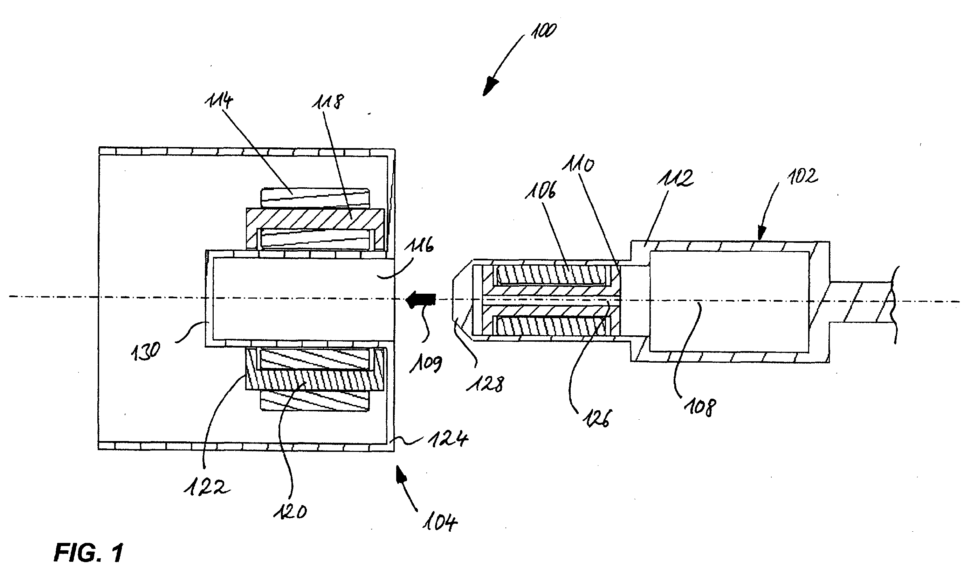

Referring now to FIG. 1, a contactless connector system 100 according to the present invention is explained in more detail.

A contactless connector 102 according to the present invention has a primary side coil 106 which is formed rotation-symmetrically around a main axis 108 of the connector 102. The main axis 108 is the longitudinal axis of the connector 102 and coincides with the plug-in direction 109 between the connector 102 and the receptacle 104. According to the present invention, the connector 102 is designed to be perfectly rotation-symmetric so that no fixed mating orientation with respect to an angle around the main axis 108 is required for an optimal inductive coupling.

For guiding the magnetic field that is induced by a current in the primary side coil 106, a ferromagnetic core 110 which also is rotation-symmetric with regard to the axis 108, is provided. The core 110 preferably consists of a soft magnetic ferrite, as this is known to a person skilled in the art. Due to the contactless inductive transfer of electrical power, the connector 102 can be covered completely by a hermetic overmolding 112. This complete encapsulation provides an ideal waterproof and rugged connector for use in rough environments.

The mating receptacle 104 provided at an EV to be charged, comprises a plurality of secondary coils 114 which are connected inductively via the plug 102 to a power source, as this is generally known for inductive charging (not shown in the figures). As this will be apparent from the following figures, the secondary coils 114 are arranged around a recess 116. The recess is formed to accommodate at least a part of the contactless connector 102, in particular, the part comprising the power transmitting primary side coil 106. Each of the secondary side coils 114 is wound onto a ferrite core 118. Such ferromagnetic cores are used, as this is generally known, for guiding the magnetic field generated by the primary side coil 106 in a proper way to couple same with the secondary side coils 114.

In the present case, each ferromagnetic core 118 has an essentially U-shaped form, its basis 120 extending along the main axis 108 and its two legs 122 being oriented towards the center of the recess 116. Thus, a particularly efficient coupling can be achieved between the secondary side coils 114 and the primary side coil 106. The receptacle 104 is also formed in a way that the coils 114 together with the cores 118 and all electric leads are encased hermetically within a housing 124. The housing 124 may be formed by a molded plastic material. In particular, the recess 116 and the side wall facing towards the connector 102 can be fabricated without any opening into which an intrusion of moisture or dust would be possible. Thus, the receptacle 104 may be installed in harsh environments which even may contain corrosives.

According to a further advantageous embodiment of the present invention, the primary side ferromagnetic core 110 has an axial opening 126 for inserting at least one lead extending to the tip 128 of the connector 102. This allows arranging additional communication means within the tip 128 for establishing a data transmission between the receptacle 104 and the connector 102. Such a data connection adds several advantageous features to the connecting system according to the present invention: Apart from authentication and identification, also safety features can be incorporated, such as a transmission from the load to the power supply that the charging is completed or that overload conditions have occurred. On the other hand, it may be recognized whether a load is attached or not, or whether the connector 102 has been inserted properly.

The communication between the secondary and the primary side may be effected by means of radio frequency, wherein an antenna element or an electromagnetic waveguide is provided on the tip of the connector. The data transmission may be based on inductive or capacitive communication means inserted in the tip 128 or, alternatively, may use optical communication. In this case a light source and/or a detector is arranged on the tip 128 of the connector 102 and a corresponding communication element is arranged near the closed end 130 of the recess 116.

The particular functions of the additional data communication of course depend on the location of the power source and the plug connector 102. In private locations, such as garages, etc. it may be enough to ensure the identity of the owner for retrieving energy, whereas in public places, payment may also be effected via the additional data communication channel.

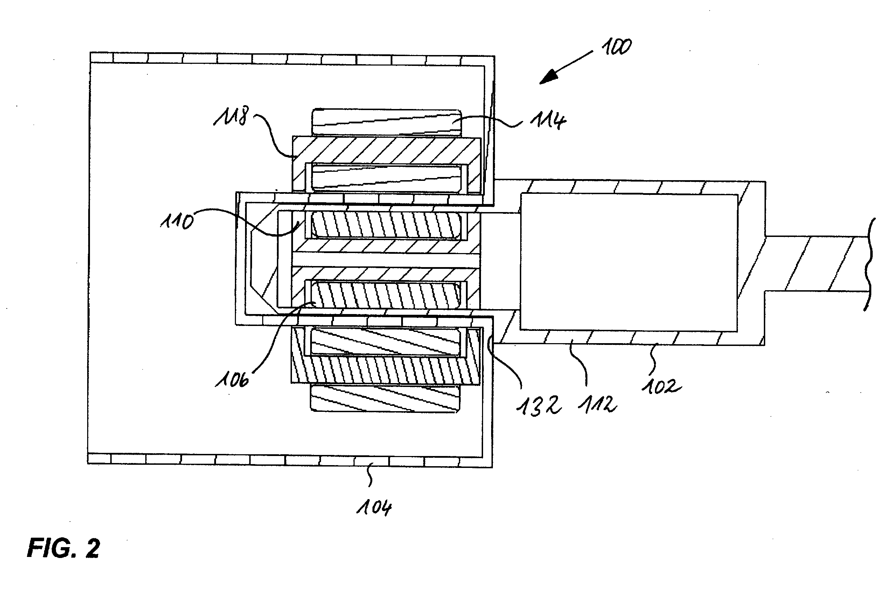

FIG. 2 shows the contactless connector system 100 according to the present invention in the fully mated position. By means of a respectively adjusted shoulder 132 provided at the housing 112 of the connector 102, the insertion depth into the recess 116 is exactly defined, thus ensuring an optimal coupling between the secondary sided coils 114 and the primary side coil 106. The cores 110 and 118, respectively, are formed to provide a magnetic path for guiding the magnetic fields which is closed as tightly as possible. Of course, as already mentioned, the role of the secondary and primary side may also be exchanged by connecting the coils 114 within the receptacle 104 to a power supply and connecting the coil 106 to a respective load.

In any case, a secure and complete galvanic separation between the secondary side and the primary side is effected by means of the hermetic enclosures 112 and 124, respectively.

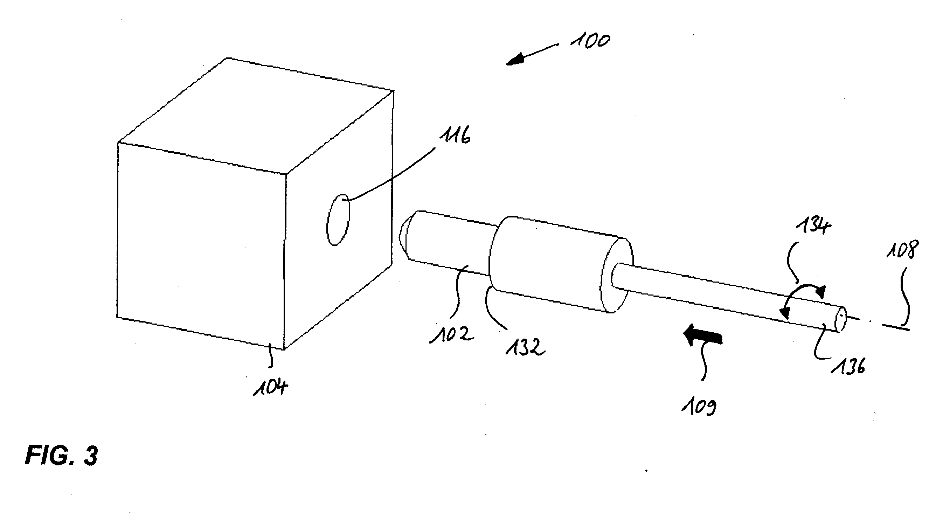

FIG. 3 shows the contactless connector system 100 in a schematic perspective view. The contactless connector 102 is inserted into the recess of the receptacle 104 in a direction 109 along the main axis 108. According to the present invention, the only accurate positioning that an operator has to be aware of is to insert the connector 102 until the shoulder 132 touches the housing 124 of the receptacle. Apart from that the connector 102 may be rotated freely around the main axis 108, as this is indicated by the arrow 134. According to the embodiment envisaged in this drawing, the connector 102 is connected directly to the charging circuitry of the power supply via the cable 136, whereas the receptacle 104 is arranged somewhere at the chassis of the EV, the secondary coils 114 being connected to the battery of the electric vehicle.

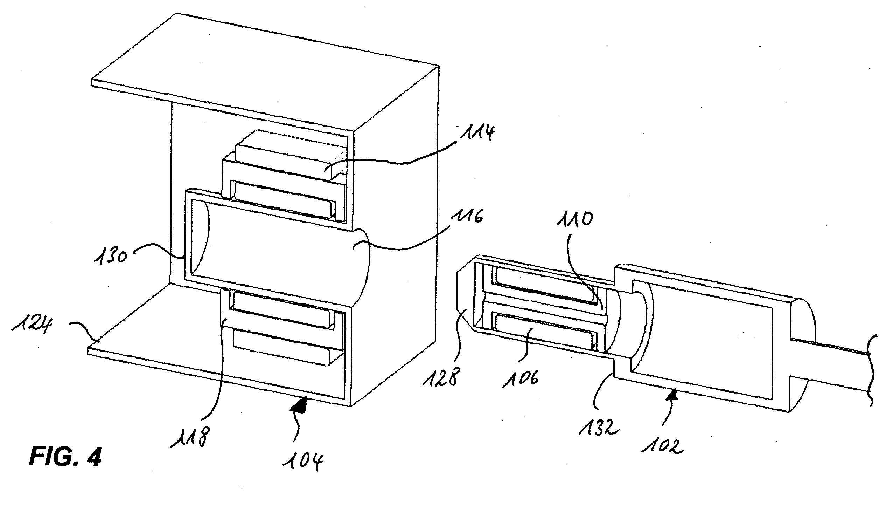

FIG. 4 shows a sectional view of the arrangement of FIG. 3 in order to more clearly explain the particular geometric arrangements according to the present invention. As may be seen from FIG. 4, the recess 116 of the receptacle 104 has the form of a hollow cylinder closed on one end 130. A hermetically sealed housing 124 is integrally formed with the recess and protects the coils 114 and all electric connections and electric circuitry which may be further contained within the housing 124.

The connector 102 has a tapered tip 128 for facilitating the insertion of the connector into the recess 116. The connector itself and in particular the coil 106 and the ferrite core 110 are formed with rotation-symmetry so that the angular position of the connector within the recess 116 does not matter. A shoulder 132 limits the insertion of the plug connector 102 into the recess 116, thus ensuring an optimal alignment of the coils 106 and 114 with respect to each other.

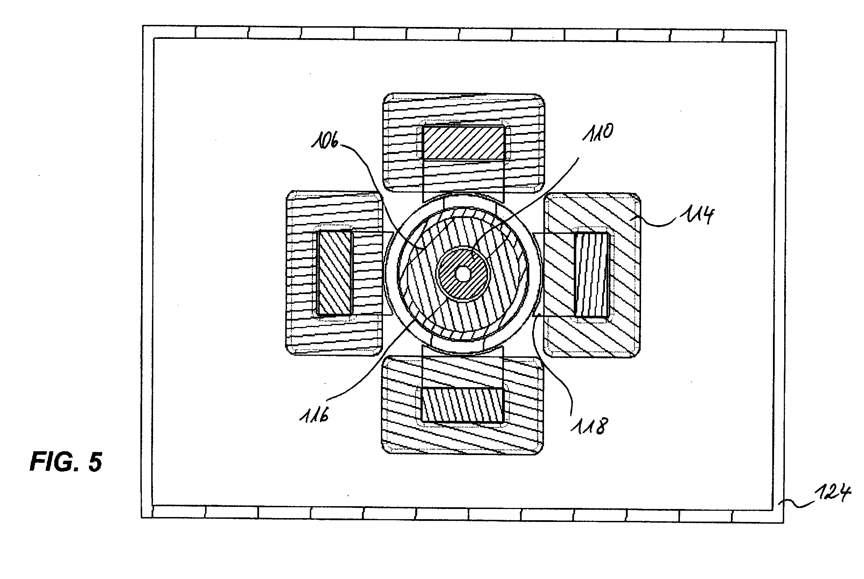

FIG. 5 shows a sectional view of the mated contactless connector system 100. As may be derived from this figure, a plurality of coils 114, here four coils, are arranged around the recess 116. The ferrite cores 118 have the form of pole pieces in order to allow a particularly uniform guiding of the magnetic field from the ferromagnetic core 110 of the connector 102. The primary side coil 106 is wound symmetrically around the main axis of the connector, which is oriented into the drawing plane in FIG. 5.

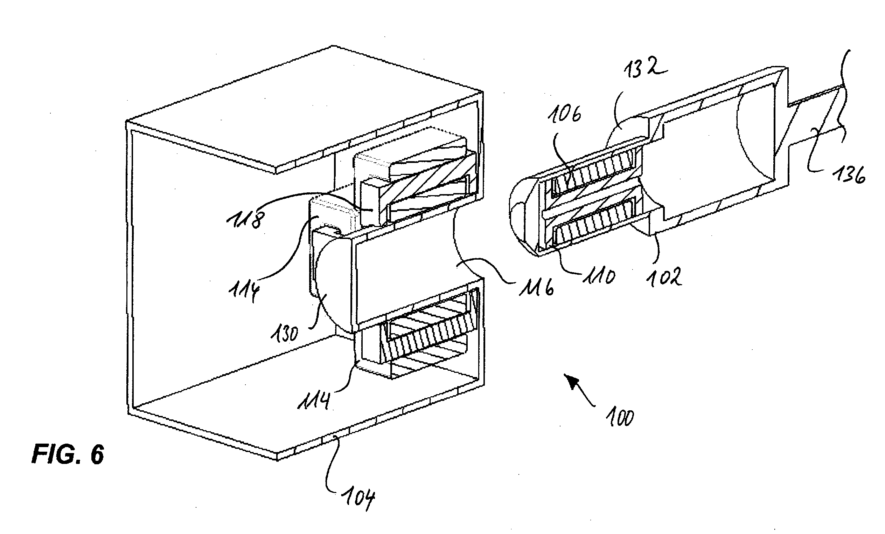

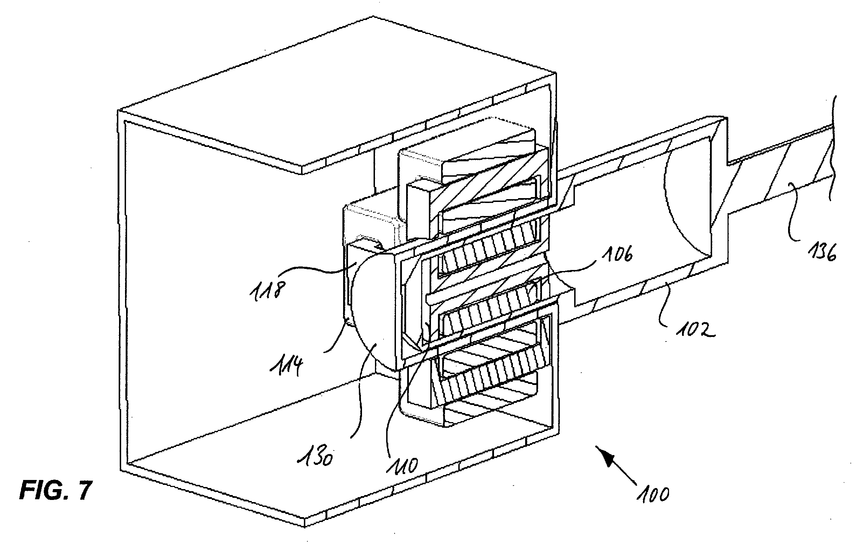

FIG. 6 and 7 show perspective views of the contactless connector system 100 in the unmated and mated position, respectively, which are rotated compared to the drawing of FIG. 4. In particular, the rounded form of the secondary side ferromagnetic cores which allows an optimal magnetic coupling to the core of the connector 102 may be seen from this figure. FIG. 5 to 7 show four coils which are evenly distributed around the circumference of the recess 116. However, also other numbers of coils 114 may be provided, as long as the arrangement allows for a rotation-symmetric insertion of the connector 102.

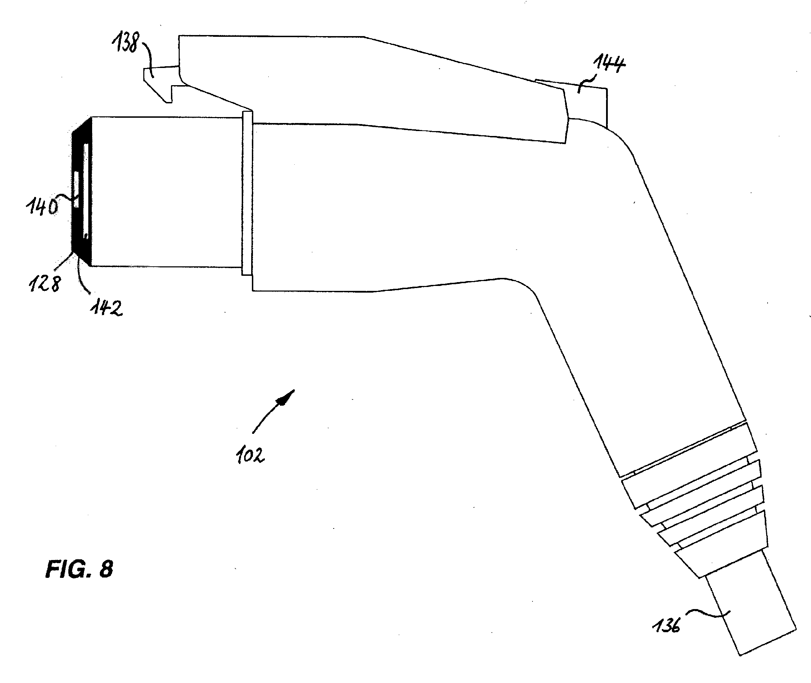

The schematic drawings of figures 1 to 7 do not show any retention means for the connector 102 when inserted into the recess 116. FIG. 8, therefore, shows an example of a latch 138, which might engage with a corresponding, preferably rotation-symmetric retention means at the receptacle 104 for securing the connector 102 in the plugged position. As shown schematically in FIG. 8, an RF or optical contact 140 and a rotation-symmetric contact ring for a capacitive or RF signal transmission 142 may be provided simultaneously or alternatively for allowing an additional data communication function, as this was explained above. Releasing means 144 allow to release the latch 138 after the charging process has been completed.

In summary, the contactless connector system 100 according to the present invention improves the transmission efficiency for transferring energy into an EV without the necessity of a tight tolerance control. For manufacturers and designers, a maximum freedom of design is achieved. The charging process and in particular connecting a vehicle to be charged to a power source may also be automated because of the simple rotation-symmetric form of the mating components. Data transmission means additionally allow automated control and authentication before, during and after the charging process.

**List of Reference Numerals:**

| **Reference Numerals** | **Description** |
|---|---|
| 100 | contactless connector system |
| 102 | connector |
| 104 | receptacle |
| 106 | primary side coil |
| 108 | main axis |
| 109 | plug-in direction |
| 110 | ferromagnetic core |
| 112 | hermetic overmolding of the connector |
| 114 | secondary side coils |
| 116 | recess |
| 118 | ferrite core |
| 120 | basis of core |
| 122 | legs of core |
| 124 | housing of receptacle |
| 126 | axial opening |
| 128 | tip of connector |
| 130 | closed end of recess |
| 132 | shoulder |
| 134 | rotation angle |
| 136 | cable |
| 138 | latch |
| 140 | RF or optical contact |
| 142 | capacitive or RF contact ring |
| 144 | releasing means for latch |

## Claims

1. Contactless connector system comprising a contactless connector for coupling an electric vehicle to a power supply and a receptacle, said connector (102) comprising:
at least one primary side coil (106) being connected to a feeding power source for being inductively coupled to at least one secondary side coil (114) being arranged at the receptacle (104), said receptacle (104) being formed to engage with the connector (102),
wherein said primary side coil (106) is constructed rotation-symmetrically with respect to a rotation axis (108) of the connector (102),
said rotation axis (108) coinciding with a plug-in direction of said contactless connector (102) into the receptacle (104), and
said receptacle (104) comprising a recess (116) for accommodating the contactless connector (102), **characterised in that** said receptacle further comprises
a plurality of secondary coils (114) which are evenly distributed around a circumference of said recess (116).

2. Contactless connector system according to claim 1, wherein said primary side coil (106) is arranged on a primary side ferromagnetic core (110) for guiding a magnetic field induced by said at least one primary side coil (106).

3. Contactless connector system according to claim 2, wherein said primary side ferromagnetic core (110) is provided with an axial opening (126) for inserting at least one lead extending to a tip (128) of said connector (102).

4. Contactless connector system according to one of the preceding claims, further comprising a hermetically sealed housing (112) encapsulating the connector.

5. Contactless connector system according to one of the preceding claims, further comprising data connection means (140, 142) for contactless communication based on radio frequency, inductive, capacitive, and/or optical data transmission.

6. Contactless connector system according to one of the preceding claims, wherein said recess (116) has the shape of a right circular cylinder with a closed basis on one end.

7. Contactless connector system according to one of the preceding claims, further comprising means for contactless communication with the connector (102) based on radio frequency, inductive, capacitive, and/or optical data transmission.

8. Contactless connector system according to one of the preceding claims, wherein said at least one secondary coil (114) is arranged around a secondary side ferromagnetic core (118) for guiding the magnetic field generated by said primary side coil (106).

9. Contactless connector system according to claim 8, wherein said secondary side ferromagnetic core (118) is essentially U-shaped, a basis (120) extending along a longitudinal middle axis (108) of the recess, and its two legs (122) extending towards the longitudinal middle axis of the recess.

10. Contactless connector system according to one of the preceding claims, comprising four secondary side coils (114) arranged around the circumference of the recess (116) in a way that two coils are opposing each other.

11. Contactless connector system according to one of the preceding claims, further comprising a hermetically sealing casing (124) being integrally formed with said recess (116).

12. Contactless connector system according to one of the preceding claims, further comprising releasable latching means (138) for securing said contactless connector (102) within said recess (116).

## Patentansprüche

1. Kontaktloses Steckverbindersystem, das einen kontaktlosen Steckverbinder zum Anschließen eines Elektrofahrzeugs an eine Stromversorgung und eine Buchse umfasst, wobei der Steckverbinder (102) Folgendes umfasst:
wenigstens eine primärseitige Spule (106), die mit einer Speisestromquelle verbunden ist, um induktiv an wenigstens eine sekundärseitige Spule (114) gekoppelt zu werden, die an der Buchse (104) angeordnet ist, wobei die Buchse (104) dafür geformt ist, mit dem Steckverbinder (102) ineinanderzugreifen,
wobei die primärseitige Spule (106) rotationssymmetrisch in Bezug auf eine Rotationsachse (108) des Steckverbinders (102) aufgebaut ist,
wobei die Rotationsachse (108) mit einer Einsteckrichtung des kontaktlosen Steckverbinders (102) in die Buchse (104) übereinstimmt, und
wobei die Buchse (104) eine Aussparung (116) zum Aufnehmen des kontaktlosen Steckverbinders (102) umfasst, **dadurch gekennzeichnet, dass** die Buchse ferner Folgendes umfasst:
mehrere Sekundärspulen (114), die gleichmäßig um einen Umfang der Aussparung verteilt sind.

2. Kontaktloses Steckverbindersystem nach Anspruch 1, wobei die primärseitige Spule (106) an einem primärseitigen ferromagnetischen Kern (110) zum Führen eines durch die wenigstens eine primärseitige Spule (106) induzierten Magnetfeldes angeordnet ist.

3. Kontaktloses Steckverbindersystem nach Anspruch 2, wobei der primärseitige ferromagnetische Kern (110) mit einer axialen Öffnung (126) zum Einfügen wenigstens einer Leitung, die sich zu einer Spitze (128) des Steckverbinders (102) erstreckt, versehen ist.

4. Kontaktloses Steckverbindersystem nach einem der vorhergehenden Ansprüche, das ferner ein hermetisch abgedichtetes Gehäuse (112) umfasst, das den Steckverbinder einkapselt.

5. Kontaktloses Steckverbindersystem nach einem der vorhergehenden Ansprüche, das ferner Datenverbindungsmittel (140, 142) für eine kontaktlose Kommunikation auf der Grundlage von Hochfrequenz-, induktiver, kapazitiver und/oder optischer Datenübertragung umfasst.

6. Kontaktloses Steckverbindersystem nach einem der vorhergehenden Ansprüche, wobei die Aussparung (116) die Form eines geraden Kreiszylinders mit einer geschlossenen Basis an einem Ende hat.

7. Kontaktloses Steckverbindersystem nach einem der vorhergehenden Ansprüche, das ferner Mittel für eine kontaktlose Kommunikation mit dem Steckverbinder (102) auf der Grundlage von Hochfrequenz-, induktiver, kapazitiver und/oder optischer Datenübertragung umfasst.

8. Kontaktloses Steckverbindersystem nach einem der vorhergehenden Ansprüche, wobei die wenigstens eine sekundärseitige Spule (114) um einen sekundärseitigen ferromagnetischen Kern (118) zum Führen des durch die primärseitige Spule (106) erzeugten Magnetfeldes angeordnet ist.

9. Kontaktloses Steckverbindersystem nach Anspruch 8, wobei der sekundärseitige ferromagnetische Kern (118) im Wesentlichen U-förmig ist, wobei sich eine Basis (120) entlang einer Längsmittelachse (108) der Aussparung erstreckt und sich seine zwei Schenkel (122) zu der Längsmittelachse der Aussparung hin erstrecken.

10. Kontaktloses Steckverbindersystem nach einem der vorhergehenden Ansprüche, das vier sekundärseitige Spulen (114) umfasst, die sich auf eine Weise, das zwei Spulen einander gegenüberliegen, um den Umfang der Aussparung (116) angeordnet sind.

11. Kontaktloses Steckverbindersystem nach einem der vorhergehenden Ansprüche, das ferner eine hermetisch abdichtende Ummantelung (124) umfasst, die integral mit der Aussparung (116) geformt ist.

12. Kontaktloses Steckverbindersystem nach einem der vorhergehenden Ansprüche, das ferner lösbare Einrastmittel (138) umfasst, um den kontaktlosen Steckverbinder (102) innerhalb der Aussparung (116) zu befestigen.

## Revendications

1. Système de connecteur sans contact, comprenant un connecteur sans contact pour accoupler un véhicule électrique, et un réceptacle, ledit connecteur (102) comprenant :
au moins une bobine du côté primaire (106), connectée à une source de courant d'alimentation en vue d'un accouplement par induction à au moins une bobine du côté secondaire (2114), agencée au niveau du réceptacle (104), ledit réceptacle (104) étant formé de sorte à s'engager dans le connecteur (102) ;
dans lequel ladite bobine du côté primaire (106) est construite en symétrie de rotation par rapport à un axe de rotation (108) du connecteur (102) ;
ledit axe de rotation (108) coïncidant avec une direction d'enfichage dudit connecteur sans contact (102) dans le réceptacle (104) ; et
ledit réceptacle (104) comprenant un évidement (116) pour recevoir le connecteur sans contact (102) ;
**caractérisé en ce que** ledit réceptacle comprend en outre plusieurs bobines du côté secondaire (114) réparties de manière uniforme autour d'une circonférence dudit évidement (116).

2. Système de connecteur sans contact selon la revendication 1, dans lequel ladite bobine du côté primaire (106) est agencée sur un noyau ferromagnétique du côté primaire (110), destiné à guider un champ magnétique induit par ladite au moins une bobine du côté primaire (106).

3. Système de connecteur sans contact selon la revendication 2, dans lequel ledit noyau ferromagnétique du côté primaire (110) comporte une ouverture axiale (126) pour insérer au moins un conducteur s'étendant vers une pointe (128) dudit connecteur (102).

4. Système de connecteur sans contact selon l'une des revendications précédentes, comprenant en outre un boîtier scellé hermétiquement (112), encapsulant le connecteur.

5. Système de connecteur sans contact selon l'une des revendications précédentes, comprenant en outre des moyens de connexion de données (140, 142), pour assurer une communication sans contact sur la base d'une transmission de données par radiofréquence, par induction, capacitive, et/ou optique.

6. Système de connecteur sans contact selon l'une des revendications précédentes, dans lequel ledit évidement (116) a la forme d'un cylindre circulaire droit, avec une base fermée sur une extrémité.

7. Système de connecteur sans contact selon l'une des revendications précédentes, comprenant en outre des moyens pour assurer une communication sans contact avec le connecteur (102), sur la base d'une transmission de données par radiofréquence, par induction, capacitive et/ou optique ;

8. Système de connecteur sans contact selon l'une des revendications précédentes, dans lequel ladite au moins une bobine du côté secondaire (114) est agencée autour d'un noyau ferromagnétique du côté secondaire (118), pour guider le champ magnétique généré par ladite bobine du côté primaire (106).

9. Système de connecteur sans contact selon la revendication 8, dans lequel ledit noyau ferromagnétique du côté secondaire (118) a pour l'essentiel une forme en U, une base (120) s'étendant le long d'un axe médian longitudinal (108) de l'évidement, et ses deux branches (122) s'étendant vers l'axe médian longitudinal de l'évidement.

10. Système de connecteur sans fil selon l'une des revendications précédentes, comprenant quatre bobines du côté secondaire (114), agencées autour de la circonférence de l'évidement (116) de manière que deux bobines sont opposées l'une à l'autre.

11. Système de connecteur sans contact selon l'une des revendications précédentes, comprenant en outre un boîtier scellé hermétiquement (124), formé d'une seule pièce avec ledit évidement (116).

12. Système de connecteur sans contact selon l'une des revendications précédentes, comprenant en outre des moyens de verrouillage à libération (138) pour fixer ledit connecteur sans contact (102) dans ledit évidement (116).
